# EUROPÄISCHE PATENTANMELDUNG

(11) **EP 0 688 842 A2**
(43) Veröffentlichungstag der Anmeldung: **27.12.1995**
(21) Anmeldenummer: 95109166.9
(22) Anmeldetag: 14.06.1995
(51) Int. Cl.: C09D 183/04, C08L 83/04, C08J 3/03

(54) **Wässrige, siliciumorganische Verbindungen enthaltende Zusammensetzungen**

(30) Priorität: 20.06.1994 DE 4421500
(71) Anmelder: Hüls Silicone Gesellschaft mit beschränkter Haftung, D-01612 Nünchritz (DE)
(72) Erfinder: Rautschek, Holger, Dr. rer. nat., D-01612 Nünchritz (DE); Otto, Reiner, D-01612 Nünchritz (DE)
(74) Vertreter: Zöllner, Gudrun

(57) **Zusammenfassung**

Die Erfindung betrifft wäßrige, siliciumorganische Verbindungen enthaltende Zusammensetzungen. Diese Zusammensetzungen können als Emulsionen u. a. beispielsweise als Bautenschutzmittel oder zum Imprägnieren von Textilien eingesetzt werden. Erfindungsgemäß bestehen die wäßrigen, siliciumorganische Verbindungen enthaltenden Zusammensetzungen aus
A) mindestens einer wasserlöslichen oder wasserdispergierbaren Verbindung der allgemeine Formel

   R¹-Aₐ-B_{b}-R¹ (I),

   und
B) einer oder mehreren siliciumorganischen Verbindungen der allgemeinen Formel

   R⁵_{c}(R⁶O)_{d}Si_{(4-c-d)/2} (V),

   sowie
C) gegebenenfalls bekannten Zusätzen.

## Beschreibung

Die Erfindung betrifft wäßrige, siliciumorganische Verbindungen enthaltende Zusammensetzungen. Diese Zusammensetzungen können als Emulsionen u. a. beispielsweise als Bautenschutzmittel oder zum Imprägnieren von Textilien eingesetzt werden.

Bei vielen Anwendungen siliciumorganischer Verbindungen ist es wünschenswert, daß diese in verdünnter Form vorliegen, um die Handhabbarkeit und Dosierung, insbesondere bei viskosen Produkten, zu erleichtern. Die Verwendung von organischen Lösemitteln, wie z. B. Benzol oder Chlorkohlenwasserstoffen, für diesen Zweck ist möglich, aber aus ökologischer und arbeitsmedizinischer Sicht nachteilig.

Diese Nachteile können umgangen werden, wenn die siliciumorganischen Verbindungen in Form von wäßrigen Emulsionen oder Dispersionen eingesetzt werden. Es ist bekannt, wäßrige Zusammensetzungen auf Basis von oligomeren linearen oder verzweigten Silanen oder Siloxanen sowie hochmolekularen polymeren Siloxanen zu verwenden. Diese Emulsionen oder Dispersionen enthalten als grenzflächenaktive Verbindungen ionogene oder nichtionogene Emulgatoren, die, im Gegesatz zum Lösemittel, nicht flüchtig sind und bei der Anwendung im Produkt verbleiben. Beispiele für geeignete Emulgatoren sind Polyether mit Kohlenwasserstoffgruppen (DD 298 651), Alkylpolyglycoside (EP 418 479), Nonyl-phenolethoxylate in Kombination mit anionischen Tensiden (EP 259 734), Sorbitanester und ethoxylierte Sorbitanester (US 47 41 861), Dodecylsulfonsäure und deren Salze (EP 245 658), Kombinationen von Polyoxyethylentriglyceriden mit Dioxyethylenoleylalkohol (EP 130 521), Polyoxyethylen-(16)-tridecylalkohol (EP 366 133), Gemische von Octylphenolethoxylaten (EP 340 816) und Kombinationen eines ethoxylierten Tridecylalkohols mit einem ethoxylierten Triglycerid (DE OS 42 23 768).

Diese bekannten wäßrigen, siliciumorganische Verbindungen enthaltenden Zusammensetzungen haben zahlreiche Nachteile. Zum Erhalt lagerstabiler Zubereitungen, sind im allgemeinen mehr als 5 Gew.-% Emulgator, bezogen auf die Menge an siliciumorganischen Verbindungen, notwendig. Diese Emulgatoren haben die Aufgabe, die siliciumorganischen Verbindungen im Wasser zu verteilen und in dieser Form zu stabilisieren. Sie leisten keinen Beitrag zur gewünschten Anwendung (z.B. zur Hydrophobierung oder als Trennmittel) sondern stören bei diesen Anwendungen durch ihren zwangsläufig polaren Charakter, welcher der gewünschten Hydrophobier- oder Trennwirkung entgegenwirkt. Deshalb ist es bei derartigen Anwendungen wünschenswert, den Anteil an polaren Fremdstoffen, wie den Emulgatoren, in den wäßrigen, siliciumorganische Verbindungen enthaltenden Zusammensetzungen zu minimieren.

Für die Verwendung von Entschäumerzubereitungen als siliciumorganische Verbindung in den wäßrigen Zusammensetzungen sind stabile Zubereitungen oftmals nur dann herstellbar, wenn neben den Emulgatoren polare Polymere wie z.B. Celluloseether (DE 26 26 944, JP 74 045 472, EP 254 499), Polyacrylate (EP 273 488), Xanthan Gum (BE 893 836) und lineare Polyurethane (DE 42 37 754) enthalten sind. Diese Verbindungen müssen oft in Mengen von 5 bis 10 Gew.-%, bezogen auf die Menge an siliciumorganischen Verbindungen, zugesetzt werden (DE 42 37 754, EP 254 499), was sich beim Einsatz der Zusammensetzung aus den schon genannten Gründen ebenfalls negativ auswirkt.

Es war daher Aufgabe der Erfindung, wäßrige, siliciumorganische Verbindungen enthaltende Zusammensetzungen zu finden, die, im Vergleich zum Stand der Technik, eine verbesserte Emulsionsstabilität aufweisen und in denen der Anteil an polaren, die Anwendung negativ beeinflussenden organischen Verbindungen minimal ist bzw. auf deren Zusatz verzichtet werden kann.

Diese Aufgabe wird gelöst durch Verwendung einer wäßrigen, siliciumorganische Verbindungen enthaltenden Zusammensetzungen, welche aus
A) mindestens einer wasserlöslichen oder wasserdispergierbaren Verbindung der allgemeine Formel

   R¹-Aₐ-B_{b}-R¹ (I),

   worin R¹ gleiche oder verschiedene, kettenabbrechende Gruppen mit 1 bis 30 Kohlenstoffatomen bedeutet und a und b vorzugsweise größer gleich 1 sind, A einer Gruppe der allgemeinen Formel

   -CONH-R²-NHCO-[OCₙH₂ₙ]ₘ-O- (II)

   entspricht, worin R² gleiche oder verschiedene, substituierte und/oder unsubstituierte, zweiwertige Kohlenwasserstoffreste mit 2 bis 40 Kohlenstoffatomen darstellt sowie n einen Wert von 2 bis 4 und m einen Wert von 30 bis 500 annehmen, und B einer Gruppe der allgemeinen Formel

   -CONH-R²-NHCONR³-R⁴-NR³- (III

   )

   und/oder der allgemeinen Formel

   -CONH-R²-NHCONR³-R⁴-O- (IV)

   entspricht, worin R² die oben angegebene Bedeutung hat, R³ gleiche oder verschiedene, substituierte und/oder unsubstituierte, einwertige Kohlenwasserstoffreste mit 1 bis 30 Kohlenstoffatomen und/oder Wasserstoff und R⁴ gleiche oder verschiedene, substituierte und/oder unsubstituierte und/oder durch Heteroatome unterbrochene, zweiwertige Kohlenwasserstoffreste mit 2 bis 10 Kohlenstoffatomen, darstellen, und
B) einer oder mehreren siliciumorganischen Verbindungen der allgemeinen Formel

   R⁵_{c}(R⁶O)_{d}Si_{(4-c-d)/2} (V),

   wobei R⁵ gleiche oder verschiedene, gesättigte und/oder ungesättigte, substituierte und/oder unsubstituierte einwertige Kohlenwasserstoffreste mit 1 bis 30 Kohlenstoffatomen und/oder Wasserstoff bedeutet, mit der Maßgabe, daß nur ein Wasserstoffatom pro Siliciumatom gebunden ist, R⁶ entweder Wasserstoff oder R⁵ darstellt sowie (c+d) ganze oder gebrochene Zahlen größer 1 bedeuten, sowie
C) gegebenenfalls bekannten Zusätzen besteht.

Aₐ-Bₐ sind zufällig verteilte und/oder als Blöcke über Urethan- oder Harnstoffgruppen verknüpfte Einheiten. R² können beispielsweise Gruppen, die aus Hexandiisocyanat, Toluoldiisocyanat oder Naphtalindiisocyanat stammen, sein. Vorzugsweise ist mindestens ein Rest R³ je Einheit B ein substituierter oder unsubstituierter, einwertiger Kohlenwasserstoffrest mit mindestens 8 Kohlenstoffatomen. R⁴ kann Ethergruppierungen und/oder tertiäre Amingruppierungen in der Kohlenwasserstoffkette enthalten. Die Anzahl der Einheiten A und B, a und b, wird beispielsweise so gewählt, daß die Viskosität einer 2%-igen, wäßrigen Lösung 20 mm²/s bis 2000 mm²/s, vorzugsweise 50-500 mm²/s, beträgt. Das Verhältnis von a zu b ist vorzugsweise größer 1, üblicherweise größer 5.

Beispiele für derartige Verbindungen sind polymere Umsetzungsprodukte von
- Toluoldiisocyanat mit Polyethylenglycol, Monoethanolamin und Stearylalkohol
- 1,6-Hexandiisocyanat mit Polyethylenglycol/Polypropylenglycolco-polymeren, Ethylendiamin und einem Gemisch aus C₁₂- bis C₁₆-Fettal-koholen
- 1,4-Butandiisocyanat mit Polyethylenglycol, N-Stearyl-1,6-Hexandiamin und Myristylalkohol.

Derartige und ähnliche Verbindungen, die im Rahmen der vorliegenden Erfindung eingesetzt werden können, sowie deren Synthese, sind bekannt (s. beispielsweise EP 127 950, EP 307 775).

Beispiele für Verbindungen der allgemeinen Formel (V) sind Trialkoxysilane oder deren Teilhydrolysate, mit der Maßgabe, daß R⁵ gleiche oder verschiedene, gesättigte und/oder ungesättigte, substituierte und/oder unsubstituierte einwertige Kohlenwasserstoffreste mit 1 bis 20 Kohlenstoffatomen und R⁶ eine Alkylgruppe mit 1 bis 4 Kohlenstoffatomen bedeuten. Wäßrige Zusammensetzungen, die diese Verbindungen enthalten, werden z.B. zur Hydrophobierung von Mauerwerk oder Baustoffen eingesetzt.

Polymere Organosiloxane, die, neben geringen Mengen an R₂SiO_{2/2}-, R₃SiO_{1/2}- und SiO₂-Einheiten, im wesentlichen aus RSiO_{3/2}-Einheiten bestehen, können ebenfalls, gegebenenfalls in gelöster Form, als siliciumorganische Verbindung der allgemeinen Formel (V) enthalten sein. Erfindungsgemäße Zusammensetzungen, die solche Verbindungen, die auch als Siliconharze bezeichnet werden, enthalten, können z. B. als Hydrophobier- oder Imprägniermittel oder als Bindemittel für Anstrichfarben angewendet werden.

Es ist auch möglich, die Verbindung der allgemeinen Formel (V) als Mischungen mit Füllstoffen, z. B. hydrophiler oder hydrophober Kieselsäure, einzusetzen. Mischungen, die zu elastomeren Produkten aushärten können, werden auch als Siliconkautschuk bezeichnet. Derartige Zubereitungen sind bekannt. Sie bestehen im allgemeinen aus linearen und/oder verzweigten Polyorganosiloxanen einer bevorzugten Viskosität von 100 bis 50 000 mm²/s und feinteiliger pyrogener und/oder gefällter Kieselsäure mit einer BET-Oberfläche von 50 bis 400 m²/g. Die Verwendung von hydrophober Kieselsäure ist besonders bevorzugt. Die Hydrophobierung kann dabei vor der Verwendung oder "in situ" erfolgen. Es ist möglich, erfindungsgemäße Zusammensetzungen unter Verwendung einer Verbindung der allgemeinen Formel (I) herzustellen, ohne daß weitere Emulgatoren zugesetzt werden müssen. Es können jedoch zusätzlich nichtionogene Emulgatoren wie Sorbitanfettsäureester, ethoxylierte Sorbitanfettsäureester, ethoxylierte Fettsäuren oder deren Mischungen enthalten sein.

Verbindungen der allgemeinen Formel (V) können auch mit OH- und/oder Trimethylsiloxygruppen terminierte lineare Polydimethylsiloxane mit einer Viskosität von 10 bis 10000 mm²/s sein, wobei Produkte mit einer Viskosität von 50 bis 500 mm²/s bevorzugt sind. Solche wäßrigen Zusammensetzungen werden z. B. als Trennmittel oder zur Hydrophobierung von Mineralfasern bei der Dämmstoffherstellung verwendet.

Bei diesen genannten Einsatzgebieten ist es bevorzugt, daß die wäßrigen, siliciumorganische Verbindungen enthaltenden Zusammensetzungen keine weiteren grenzflächenaktiven Stoffe enthalten.

Die erfindungsgemäßen Zusammensetzungen enthalten beispielsweise
- bis 5 Gew.-%, vorzugsweise 0,3 bis 1,5 Gew.-%, der Verbindung der allgemeinen Formel (I)
- 10 bis 70 Gew.-%, vorzugsweise 35 bis 60 Gew.-%, der Verbindung der allgemeinen Formel (V)
- zu 100 Gew.-% Wasser.

Gegebenenfalls können, je nach Verwendungs- oder Einsatzzweck, noch weitere bekannte Bestandteile, wie z. B. Katalysatoren, Pigmente, Verdickungsmittel und Konservierungsmittel als Additive enthalten sein.

Es war überraschend, daß die Verbindung der allgemeinen Formel (I) bereits bei einem Zusatz von 0,1 Gew.-%, bezogen auf die siliciumorganische Verbindung, eine hervorragende Stabilisierung der Emulsion bewirkt. Auch ohne Zusatz von grenzflächenaktiven Stoffen bzw. Emulgatoren gelingt es, unter Verwendung der Verbindung der allgemeinen Formel (I) in den erfindungsgemäßen Zusammensetzungen, äußerst stabile, wäßrige Emulsionen, welche in jedem Verhältnis weiter mit Wasser verdünnbar sind, herzustellen.

### Ausführungsbeispiele

Als Verbindung der allgemeinen Formel (I) wurde ein lineares Polymer mit einem Gehalt von ca. 85 Gew.-% Polyethylenglycol in der Polymerkette, ca. 2 Gew.-% hydrophoben Alkylresten an den Kettenenden und in den Einheiten B, sowie einer Viskosität der 2%-igen wäßrigen Lösung von 150 mm²/s verwendet. Diese Lösung wird im folgenden als "Polymerlösung" bezeichnet.

### Beispiel 1

180 Teile der 2%-igen Polymerlösung und 120 Teile Deionat wurden vermischt und anschließend in diese Mischung langsam 300 Teile Octyltriethoxysilan eingerührt. Die dabei entstandene Vormischung wurde durch zweimaliges Homogenisieren mit einem Hochdruckhomogenisator in eine stabile homogene Emulsion überführt. Die Emulsion war nach 6 Monaten noch unverändert.

### Beispiel 2 (Vergleichsbeispiel)

Durchführung analog Beispiel 1, jedoch wurde statt der 2%-igen Polymerlösung eine Mischung aus 9 Teilen ethoxyliertem Triglycerid (HLB-Wert: 18,1), 9 Teilen eines ethoxylierten Tridecylalkohols (HLB-Wert: 11,6) und 162 Teilen Wasser verwendet. Die so hergestellte Emulsion enthielt 6 Gew.-% Emulgator, bezogen auf das Silan. Sie wies nur eine geringe Stabilität auf und war nach 6 Wochen in zwei Phasen getrennt.

Der Vergleich der anwendungstechnischen Prüfung zeigt ebenfalls die Überlegenheit der erfindungsgemäßen Zusammensetzung aus Beispiel 1. Dazu wurden Kalkzementsteine 60 sec in eine auf 7 Gew.-% Silan verdünnte Emulsion getaucht und nach einer Trockenzeit von 14 Tagen die kapillare Wasseraufnahme über einen Zeitraum von 48 h gravimetrisch bestimmt. Die Ergebnisse (Mittelwerte von fünf imprägnierten Steinen) sind in Tabelle 1 zusammengestellt:

**Tabelle 1**

| Wasseraufnahme nach 48 h | Imprägniert mit Emulsion nach Beispiel 1 | Imprägniert mit Emulsion nach Beispiel 2 | unbehandelt |
|---|---|---|---|
| Kalkzement | 2,5 % | 17,3 % | 26,2 % |

Die mit der nichterfindungsgemäßen Zubereitung imprägnierten Steine zeigen eine wesentlich höhere Wasseraufnahme.

### Beispiel 3

In 300 Teile der 2%igen Polymerlösung wurden 300 Teile Polydimethylsiloxan einer Viskosität von 350 mm²/s eingerührt. Diese Mischung wurde durch einmaliges Durchlaufen eines Laborhochdruckhomogenisators bei 250 bar homogenisiert. Anschließend wurden weitere 300 Teile des Polydimethylsiloxanes eingerührt. Diese Vormischung durchlief dreimal den Homogenisator bei 250 bar und nach Zugabe von 100 Teilen Deionat nochmals einmal. Es entsteht eine homogene Emulsion hervorragender Stabilität, welche nach 6 monatiger Standzeit unverändert war.

### Beispiel 4

Durchführung analog Beispiel 3, jedoch wurde statt des Polydimethylsiloxanes ein dihydroxyterminiertes Polydimethylsiloxan einer Viskosität von 75 mm²/s verwendet. Es wurde wiederum eine sehr stabile Emulsion erhalten, die nach 6 monatiger Standzeit unverändert war.

Die nach Beispiel 3 und 4 erhaltenen Produkte sind als Trennmittel (z. B. bei der Reifenherstellung) oder als Hydrophobiermittel (z. B. bei der Dämmstoffherstellung) einsetzbar. Sie enthalten, analog dem Produkt aus Beispiel 1, außer der siliciumorganischen Verbindung und Wasser nur eine minimale Menge der Verbindung der allgemeinen Formel (I), und weisen eine verbesserte Wirksamkeit im Vergleich zum Stand der Technik auf.

### Beispiel 5

600 Teile eines Polyorganosiloxans, das aus CH₃SiO_{3/2}-Einheiten bestand und eine Viskosität von 45000 mm²/s aufwies, wurden mit 400 Teilen der Polymerlösung unter Verwendung eines Rotor-Stator-Homogenisator innigst vermischt. Nach 5 min wurde eine stabile homogene Emulsion erhalten.

### Beispiel 6

300 Teile eines Gemisches aus 96 Teilen Polydimethylsiloxan einer Viskosität von 350 mm²/s und 4 Teilen einer gefällten, hydrophoben Kieselsäure mit einer BET-Oberfläche von 80 m²/g wurden mit 150 Teilen eines Emulgatorgemisches aus Sorbitanmonostearat und Polyoxyethylenstearat, 50 Teilen der Polymerlösung und 500 Teilen Deionat emulgiert. Es wurde eine sehr stabile, leicht verdünnbare Emulsion erhalten, die auch nach 18 Monaten Lagerung, mehrfachen Einfrieren und Auftauen (auch unter Schütteln) keine Anzeichen von Instabilität zeigt.

### Beispiele 7 bis 11

Durchführung analog Beispiel 6. Verwendete Verbindungen und Ergebnisse enthält Tabelle 2.

**Tabelle 2**

| Beispiel | Zusatz von 0,1 Gew.-%, bezogen auf Siloxan | Zustand der Emulsion nach 8 Wochen Lagerung | Mischbarkeit der Emulsion mit Wasser |
|---|---|---|---|
| 7 | Polymerlösung | Emulsion | sehr gut |
| 8 | Xanthan Gum | getrennt | ungenügend |
| 9 | Polyvinylalkohol | getrennt | ungenügend |
| 10 | Carboxymethylcellulose | getrennt | ungenügend |
| 11 | Na-Polyacrylat | getrennt | ungenügend |

### Beispiel 12

100 Teile der Polydimethylsiloxan-Kieselsäure-Mischung aus Beispiel 6 wurden mit 100 Teilen Polymerlösung, 730 Teilen Deionat und 70 Teilen eines Emulgatorgemisches, bestehend aus Sorbitanmonostearat und Polyoxyethylen(40)stearat im Verhältnis 2 zu 1, emulgiert. Erhalten wurde eine sehr stabile, leicht mit Wasser verdünnbare Emulsion, die eine Auslaufzeit im Fordbecher (Düse 4) von 15 sec aufwies und die auch nach 18 Monaten Lagerung bei Raumtemperatur und mehrfachen Einfrieren und Auftauen (auch unter Schütteln) stabil war.

### Beispiel 13 Vergleichsbeispiel

Durchführung analog Beispiel 12, nur wurde keine Polymerlösung verwendet. Die erhaltene Emulsion wies eine Auslaufzeit im Fordbecher (Düse 4) von 13 sec auf und war nach dreiwöchiger Lagerung in zwei Phasen getrennt.

### Beispiel 14

In 500 Teile der Polymerlösung wurden innerhalb von 10 min 200 Teile der Polydimethylsiloxan-Kieselsäure-Mischung aus Beispiel 6 eingerührt. Nach Zugabe von 300 Teilen Deionat wurde die Mischung durch zweimaliges Durchlaufen eines Laborhochdruckhomogenisators bei 250 bar homogenisiert. Erhalten wurde eine dünnflüssige, stabile Emulsion.

## Patentansprüche

1. Wäßrige, siliciumorganische Verbindungen enthaltende Zusammensetzungen, bestehend aus
A) mindestens einer wasserlöslichen oder wasserdispergierbaren Verbindung der allgemeine Formel
R¹-Aₐ-B_{b}-R¹ (I),
worin R¹ gleiche oder verschiedene, kettenabbrechende Gruppen mit 1 bis 30 Kohlenstoffatomen bedeutet und a und b größer gleich 1 sind, A einer Gruppe der allgemeinen Formel
-CONH-R²-NHCO-[OCₙH₂ₙ]ₘ-O- (II)
entspricht, worin R² gleiche oder verschiedene, substituierte und/oder unsubstituierte, zweiwertige Kohlenwasserstoffreste mit 2 bis 40 Kohlenstoffatomen darstellt sowie n einen Wert von 2 bis 4 und m einen Wert von 30 bis 500 annehmen, und B einer Gruppe der allgemeinen Formel
-CONH-R²-NHCONR³-R⁴-NR³- (III)
und/oder der allgemeinen Formel
-CONH-R²-NHCONR³-R⁴-O- (IV)
entspricht, worin R² die oben angegebene Bedeutung hat, R³ gleiche oder verschiedene, substituierte und/oder unsubstituierte, einwertige Kohlenwasserstoffreste mit 1 bis 30 Kohlenstoffatomen und/oder Wasserstoff und R⁴ gleiche oder verschiedene, substituierte und/oder unsubstituierte und/oder durch Heteroatome unterbrochene, zweiwertige Kohlenwasserstoffreste mit 2 bis 10 Kohlenstoffatomen, darstellen, und
B) einer oder mehreren siliciumorganischen Verbindungen der allgemeinen Formel
R⁵_{c}(R⁶O)_{d}Si_{(4-c-d)/2} (V),
wobei R⁵ gleiche oder verschiedene, gesättigte und/oder ungesättigte, substituierte und/oder unsubstituierte einwertige Kohlenwasserstoffreste mit 1 bis 30 Kohlenstoffatomen und/oder Wasserstoff bedeutet, mit der Maßgabe, daß nur ein Wasserstoffatom pro Siliciumatom gebunden ist, R⁶ entweder Wasserstoff oder R⁵ darstellt sowie (c+d) ganze oder gebrochene Zahlen größer 1 bedeuten, sowie
c) gegebenenfalls bekannten Zusätzen.

2. Wäßrige, siliciumorganische Verbindungen enthaltende Zusammensetzungen nach Anspruch 1, dadurch gekennzeichnet, daß in der allgemeinen Formel (I) R¹ gleiche oder verschiedene, kettenabbrechende Gruppen mit mindestens 8 Kohlenstoffatomen bedeutet, mit der Maßgabe, daß mindestens ein Rest R³ von B ein substituierter und/oder unsubstituierter, einwertiger Kohlenwasserstoffrest mit mindestens 8 Kohlenstoffatomen ist.

3. Wäßrige, siliciumorganische Verbindungen enthaltende Zusammensetzungen nach Anspruch 1, dadurch gekennzeichnet, daß in der allgemeinen Formel (I) A und B zufällig verteilte und/oder als Blöcke verknüpfte Einheiten darstellen.

4. Wäßrige, siliciumorganische Verbindungen enthaltende Zusammensetzungen nach Anspruch 1, dadurch gekennzeichnet, daß in der allgemeinen Formel (I) a größer als b ist.

5. Wäßrige, siliciumorganische Verbindungen enthaltende Zusammensetzungen nach Anspruch 1, dadurch gekennzeichnet, daß in der allgemeinen Formel (IV) der Rest R⁴ Ethergruppierungen und/oder tertiäre Amingruppierungen in der Kohlenwasserstoffkette enthält.

6. Wäßrige, siliciumorganische Verbindungen enthaltende Zusammensetzungen nach Anspruch 1, dadurch gekennzeichnet, daß die Verbindung der allgemeinen Formel (V) ein Trialkoxysilan oder dessen Teilhydrolysat ist, mit der Maßgabe, daß R⁵ gleiche oder verschiedene, gesättigte und/oder ungesättigte, substituierte und/oder unsubstituierte, einwertige Kohlenwasserstoffreste mit 1 bis 20 Kohlenstoffatomen und R⁶ eine Alkylgruppe mit 1 bis 4 Kohlenstoffatomen bedeuten.

7. Wäßrige, siliciumorganische Verbindungen enthaltende Zusammensetzungen nach Anspruch 1, dadurch gekennzeichnet, daß die Verbindung der allgemeinen Formel (V) ein mit OH- und/oder Trimethylsiloxygruppen terminiertes, lineares Polydimethylsiloxan einer Viskosität von 10 bis 10000 mm²/s ist.

8. Wäßrige, siliciumorganische Verbindungen enthaltende Zusammensetzungen nach Anspruch 1, dadurch gekennzeichnet, daß als siliciumorganische Verbindung eine Mischung von Verbindungen der allgemeinen Formel (V) mit 2 bis 15 Gew.-% hydrophiler und/oder hydrophober feinteiliger Kieselsäure eingesetzt wird.

9. Wäßrige, siliciumorganische Verbindungen enthaltende Zusammensetzungen nach Anspruch 1, dadurch gekennzeichnet, daß die Verbindung der allgemeinen Formel (I) mit weniger als 5 Gew.-%, bezogen auf die siliciumorganische Verbindung der allgemeinen Formel (V), enthalten ist.

10. Wäßrige, siliciumorganische Verbindungen enthaltende Zusammensetzungen nach Anspruch 1, dadurch gekennzeichnet, daß als bekannte Zusätze nichtionogene Emulgatoren enthalten sind.

11. Wäßrige, siliciumorganische Verbindungen enthaltende Zusammensetzungen nach Anspruch 10, dadurch gekennzeichnet, daß als nichtionoge Emulgatoren Sorbitanfettsäureester, ethoxylierte Sorbitanfettsäureester und/oder ethoxylierte Fettsäuren enthalten sind.
